# EUROPEAN PATENT APPLICATION

(11) **EP 3 754 445 A1**
(43) Date of publication of application: **23.12.2020**
(21) Application number: 19180634.8
(22) Date of filing: 17.06.2019
(51) Int. Cl.: G05B 23/02, G06Q 10/06

(54) **COMPUTER-ASSISTED CONFIGURATION OF A TECHNICAL SYSTEM**

(71) Applicant: Siemens Aktiengesellschaft, 80333 München (DE)
(72) Inventor: Mogoreanu, Serghei, 81827 München (DE); Rümmele, Nataliia, 81739 München (DE)

(57) **Abstract**

The invention specifies a computerized method for configuring the construction of a technical system comprising a sequence (Pi) of system components (Si), whereby each sequence (Pi) of system components (Si) can be assigned to a sequence pattern and whereby the sequence comprises at least one system component (Si),
whereby the method comprises the following steps:
- specifying a support threshold for sequence patterns (M1) by a user,
- starting the configuration of the technical system (M2) by choosing a sequence of system components (Si) by the user (U),
- analysing (M3) the chosen sequence (Pi) of system components (Si) and extracting sequence patterns by an automation unit (A), and
- introducing (M4) at least one further system component (Si) based on the extracted sequence pattern and according to the support threshold by the automation unit (A).

The invention further specifies a computer program product and a computer-readable storage medium.

## Description

### Field of the Invention

The present invention relates to a computerized method for configuring the construction of a technical system comprising a sequence of system components, whereby each sequence of system components can be assigned to a sequence pattern and whereby the sequence comprises at least one system component. The invention further specifies a computer program product and a computer-readable storage medium.

### Background of the Invention

Creation and configuration of technical systems (e.g. in form of technical projects, e.g. engineering projects) is a very complex and time-consuming task, requiring vast amounts of domain-specific knowledge. Due to the sheer number of steps involved in configuring a typical technical system, lack of training data, as well as computational complexity, it is infeasible to automate the whole process. However, it is possible to automate simple steps typically performed by an engineer working on a specific type of technical systems.

A system for enabling the training of personalized software components (which can be refer to as "assistants") that would take over the task of performing simple steps in the process of configuring/designing a technical system for a given user within a given engineering tool would facilitate the process a lot. An example of a step that such an assistant could take over is the introduction of a specific programming block into the system (e.g., checking the air pressure of a pneumatic element) given certain pre-conditions (e.g., presence in the system of pneumatic elements).

The state of the art are two approaches to fulfil the proposed functionality:
a) Users can manually define each rule that they want to be applied throughout their technical projects/ technical systems, which is a lot more labour-intensive approach.
b) An engineering platform for technical projects/ technical systems can be supplied with a recommendation engine maintained by the platform development team. In this case, the recommendations are not personalized, and the user has no control over the quality of recommendations.

### Summary of the Invention

The objective of the present invention is to improve and facilitate the configuration of technical systems.

The invention is given by the features of the independent claims. Advantageous embodiments are provided in the dependent claims. Further features, application possibilities, and advantages of the invention result from the following description.

According to the invention the objective is accomplished by a method automatically introducing system components of a technical system during the configuration of the technical system based on previous system configurations used to train the method. The method is assisting a user during the configuration of the technical system.

The invention claims a computerized method for configuring the construction/ creation of a technical system/ designing a technical system comprising a sequence of system components, whereby each sequence of system components can be assigned to a sequence pattern and whereby the sequence comprises at least one system component.
The method comprises the following steps:
- specifying a support threshold for sequence patterns by a user,
- starting the configuration of the technical system by choosing a sequence of system components by the user,
- analysing the chosen sequence of system components and extracting sequence patterns by an automation unit, and
- introducing at least one further system component based on the extracted sequence pattern and according to the support threshold by the automation unit.

Summarized, the method supports the user with configuring the construction/ creation of the technical system based on the chosen sequence of system components and the at least one further introduced system component.

The purposed method has the advantage to automate simple steps typically performed by an engineer/ user working on the configuration and construction of a specific type of technical system/ engineering projects.

According to a further embodiment the system components include technical operations and/ or hardware units. An example of a step that the automation unit (or assistant) could take over is the introduction of a specific system component in form of a programming block into the technical system (e.g., checking the air pressure of a pneumatic element) given certain preconditions (e.g., presence in the system of pneumatic elements).
According to a further embodiment at least one equivalence relation function between sequence patterns is specified by the user before starting the configuration of the technical system.

With no equivalence relation function specified, the method requests exact equivalence of the sequence of system components for sequence patterns to be equal. No specified equivalence relation function is equal to a trivial equivalence relation function. In this case the method requests exact equivalence of the sequence of system components for sequence patterns to be equal. This means a trivial sequence pattern equivalence relation function specification requests a common first system component directly followed by a common second system component for sequence patterns to be equal.

According to a further embodiment a sequence pattern equivalence relation function specification can request at least one equal first system component directly or non-directly followed by at least one equal second system component for sequence patterns to be equal (non-trivial equivalence relation function).

According to a further embodiment the automation system is trained by the following steps in advance and while used:
- configuring a technical system by choosing a sequence of system components by the user,
- storing the chosen sequence of system components in a database, and
- training the automation unit by using the sequence of system components stored in the database.
The advantage of this embodiment of the method is a personalization for a given user within a given engineering tool for configuration of a technical system.

Further, the method allows for automatically detecting parts of the user's workflow that could be performed automatically by the automation unit.

According to a further embodiment the support threshold of a sequence pattern is a value that indicates how frequent a sequence pattern must be in the database that the automation unit introduces a system component based on the analysed sequence pattern.

Each sequence of system components chosen by the user is stored in the database with its occurrence (during training, see above). The occurrence is used to check if the support threshold is reached. If the support threshold is met the automation unit introduces a system component as response to the sequence pattern chosen by the user.

Per each new/ yet uncovered sequence pattern chosen by the user, the automation unit saves a new introduction. Optionally, the user can preciously be asked to validate the automatic introduction of the system component based on a specific analysed sequence pattern in future configurations.

According to a further embodiment a sequence pattern describes a series of successive system components.

According to a further embodiment the analysis of the pattern includes a pattern mining procedure.

According to a further embodiment the database is organized in form of a search tree. The search tree keeps all discovered sequence patterns and their current support measures (number of occurrence). In case the user creates a new engineering project for a new technical system, the method will not re-calculate the whole search tree from scratch, but it will rather update the existing search tree. Update of the search tree includes re-calculation of support measures for sequence patterns already in the search tree as well as further growth of the search tree. Depending on the choice of the equivalence relation function, the search tree might look differently.

According to a further embodiment the database stores sequences of system components auf one user or of multiple users. This means that analyzation of the pattern of the sequence of system components chosen by the user in combination with the database by the automation unit is done based on database data of one user (personalization) or of multiple (similar) users.

If it is only stored for one user, the method has the advantage of a personalization for the given user within a given engineering tool for configuration of a technical system.

Given consent, trained automation unit may be shared among similar users (e.g., working on similar technical systems (projects, same application area, same business unit, etc.)). This has the advantage that similarities between technical systems lead to synergy effects.

According to a further embodiment the technical system is an engineering system, an automatization system, a production system and/ or an industrial system and/ or includes a technical project on the technical system.

The present invention further claims a computer program product comprising instructions which, when the program is executed by the computational device, cause the computational device to carry out the steps of the inventive method.

The present invention further claims a computer-readable storage medium comprising instructions which, when executed by the computational device, cause the computational device to carry out the steps of the inventive method.

Compared to the state of art, the purposed method is substantially less labour-intensive. Instead of asking the users to manually define the rules to be applied throughout future projects, the purposed method automatically detects parts of the user's workflow that could be automated while the user continues to interact with the engineering software a familiar way.

Further, state of the art methods involve a recommendation unit trained on aggregated information from various users and thus provides general recommendations, while the purposed method learns the steps that are customary to a specific user.

Summarized the purposed method has the potential of reducing the time needed for designing/configuring a technical project by automating simple and repetitive steps performed by users, as well as reduce the frustration levels resulting from performing such repetitive steps. In addition, the purposed method may reduce the number of errors introduced into technical projects due to forgetfulness of the responsible engineer.

Further benefits and advantages of the present invention will become apparent after a careful reading of the detailed description with appropriate reference to the accompanying drawings.

### Brief Description of the Drawings

- Fig. 1: shows a flow diagram of the purposed method,
- Fig. 2: shows sequences of system components,
- Fig. 3: shows a trivial sequence pattern equivalence relation function specification,
- Fig. 4: shows a non-trivial sequence pattern equivalence relation function specification,
- Fig. 5: shows a search tree resulting from sequence pattern mining, and
- Fig. 6: shows the overall workflow of the proposed method.

### Detailed Description of the Invention

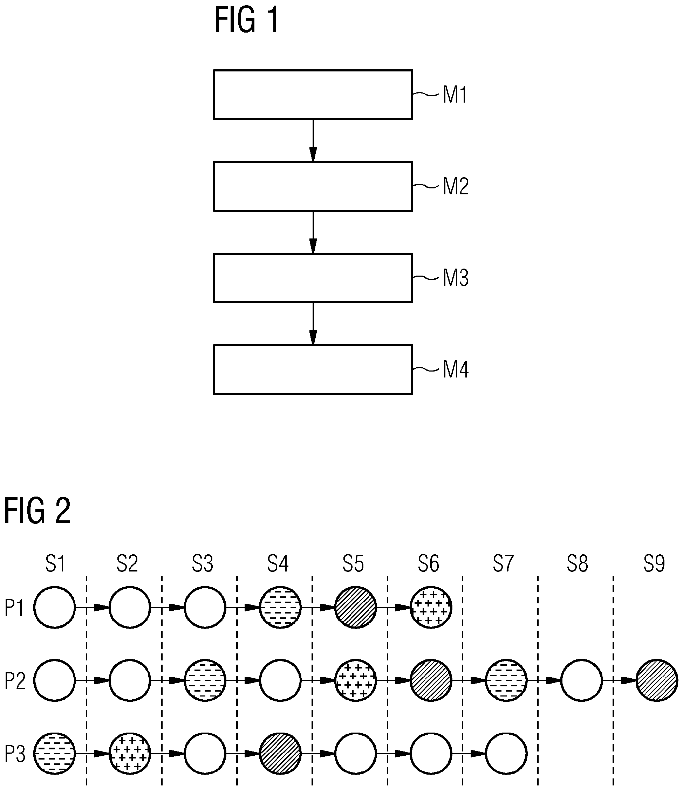

Fig. 1 shows a flow diagram of the purposed computerized method for configuring the construction of a technical system comprising a sequence of system components, whereby each sequence of system components can be assigned to a sequence pattern and whereby the sequence comprises at least one system component.

The method comprises the following steps:
- Method step M1: specifying a support threshold for sequence patterns and optionally at least one equivalence relation function between sequence patterns by a user,
- Method step M2: starting the configuration of the technical system by choosing a sequence of system components by the user,
- Method step M3: analysing the chosen sequence of system components and extracting sequence patterns by an automation unit, and
- Method step M4: introducing at least one further system component based on the extracted sequence pattern and according to the support threshold (and the optional equivalence relation function) by the automation unit.
Every project of configuring a technical system can be represented as a sequence of operations performed consecutively/ sequences of system components P1, P2, and P3 chosen by a user (see Fig. 2). Fig. 2 shows exemplary sequences of system components P1, P2, and P3 chosen by a user, e.g. an engineer in the process of configuring an engineering project. Each sequences of system components P1, P2, and P3 has multiple system components S1 to S9. The shading of the circles indicate the type of the system component/ action that the user chooses.

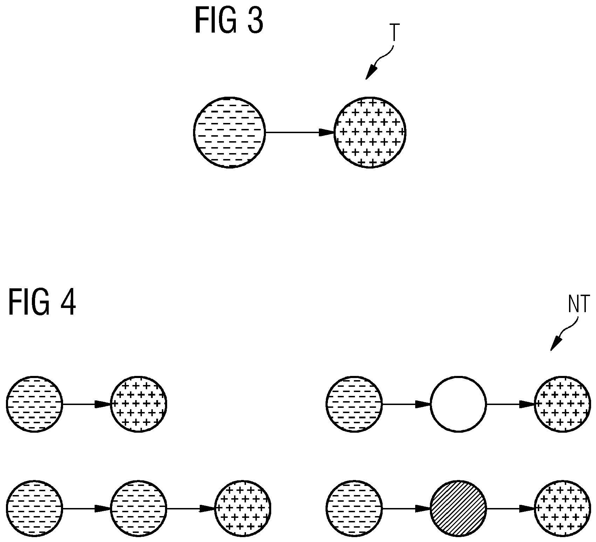

Fig. 3 shows a trivial sequence pattern equivalence relation function specification T. The trivial sequence pattern equivalence relation function specification T requests exact equivalence of the sequence of system components for sequence patterns to be equal. This means a trivial sequence pattern equivalence relation function specification T requests a common first system component directly followed by a common second system component for sequence patterns to be equal. System component in between of the first system component and the second system component are not allowed. The trivial sequence pattern equivalence relation function specification T can be used as default.

Fig. 4 shows a non-trivial sequence pattern equivalence relation function specification NT. The non-trivial sequence pattern equivalence relation function specification NT requests at least one equal first system component (shaded with "-" in the example of Fig. 4) directly or non-directly followed by at least one equal second system component (shaded with "+" in the example of Fig. 4) for sequence patterns to be equal.

In the example of Fig. 4, the user wants all sequence patterns that start with the specified first system component and end with the specified second system component steps to be equivalent in case they are separated by not more than 1 other system component. A support threshold is a value that indicates how frequent a sequence pattern must be in a project database that an automation unit introduce a system component based on a sequence pattern analysed. For example, the support measure (measure to be compared with the support threshold) of the pattern shown in Fig. 3 (shaded with "-" → shaded with "+") is one third in the project database depicted in Fig. 2 if the user chooses the trivial sequence pattern equivalence relation function specification T (Fig. 3). However, if the user chooses the non-trivial sequence pattern equivalence relation function specification NT (Fig. 4), then the support measure of this pattern is 1.

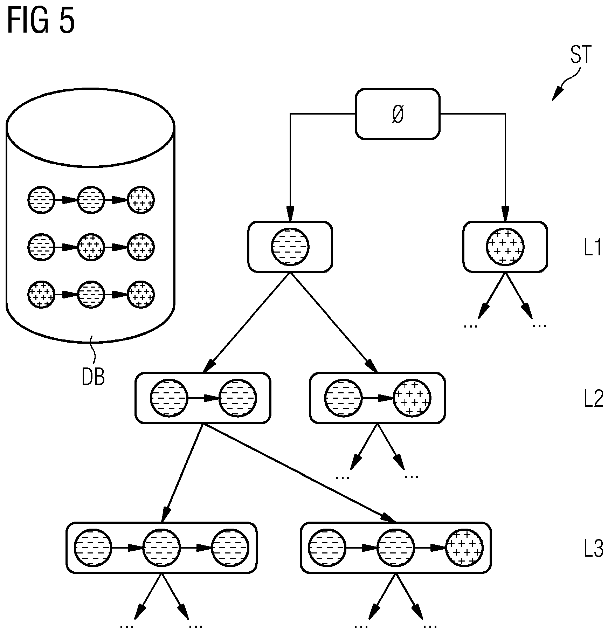

Fig. 5 shows a search tree ST resulting from sequence pattern mining on a collection of configurations of technical systems (projects) in the database DB. The search tree has multiple layers L1 to L3. Each further layer includes one further system component.

The method of the invention monitors the sequence of operations performed consecutively/ sequences of system components chosen by a user in the engineering software/ tools and actively maintains the search tree ST. The search tree ST keeps all discovered sequence patterns and their current support measures (measure to be compared with the support threshold). In case the user creates a new engineering project for a new technical system, the method of the invention will not re-calculate the whole search tree ST from scratch, but it will rather update the existing search tree ST. Update of the search tree ST includes re-calculation of support measures for sequence patterns already in the search tree ST as well as further growth of the search tree ST. Depending on the choice of the equivalence relation function, the search tree ST might look differently. For example, if the user chooses the trivial sequence pattern equivalence relation function specification (Fig. 3), then e.g. the right pattern in layer 2 L2 and the right pattern in layer 3 L3 in Fig. 5 will be treated as separate by the method of the invention. However, if the user chooses the non-trivial sequence pattern equivalence relation function specification (Fig. 4), the method of the invention will not include sequence the right pattern in layer 3 L3 in the search tree ST, since it is equivalent to the right pattern in layer 2 L2.

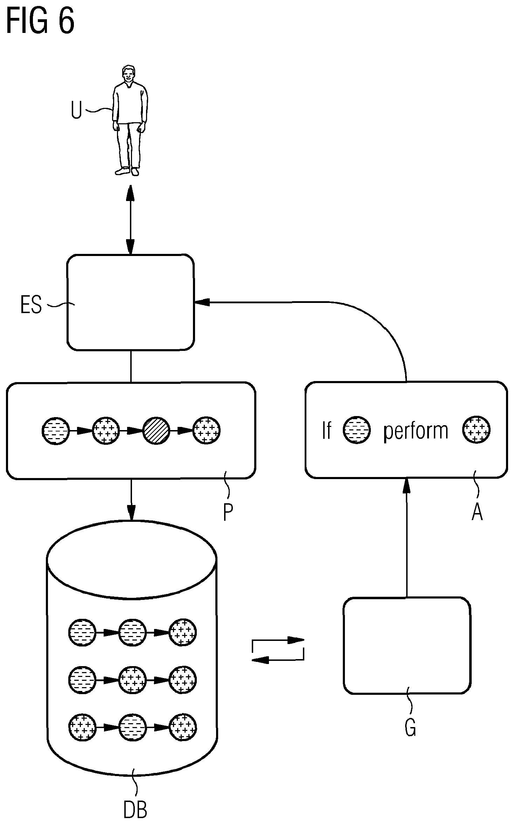

Fig. 6 shows the overall workflow of the training within the proposed method. A user U works with an engineering software ES. The user U choses/ defines a new sequences of system components P/ new project for a new technical system. The chosen sequence of system components P is stored in a database DB. The database DB is used to train an automation unit A in a "training gym" (= training algorithm) G. The trained automation unit A is used afterwards from the engineering software ES to support the user U with configuring technical systems.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

### List of Reference Signs

- A: automation unit
- DB: database
- ES: Engineering software
- G: Training gym
- Li: layer i (i ∈ [1; 3])
- Mi: Method step i (i ∈ [1; 5])
- NT: non-trivial sequence pattern equivalence relation function specification
- Si: system component i (i ∈ [1; 9])
- ST: search tree
- T: trivial sequence pattern equivalence relation function specification
- U: user
- P: new sequences of system components/ new project for a new technical system
- Pi: sequences of system components i (i ∈ [1; 3])

## Claims

1. Computerized method for configuring the construction of a technical system comprising a sequence (Pi) of system components (Si), whereby each sequence (Pi) of system components (Si) can be assigned to a sequence pattern and whereby the sequence comprises at least one system component (Si),
**whereby** the method comprises the following steps:
- specifying a support threshold for sequence patterns (M1) by a user,
- starting the configuration of the technical system (M2) by choosing a sequence of system components (Si) by the user (U),
- analysing (M3) the chosen sequence (Pi) of system components (Si) and extracting sequence patterns by an automation unit (A), and
- introducing (M4) at least one further system component (Si) based on the extracted sequence pattern and according to the support threshold by the automation unit (A).

2. Method according to claim 1,
**whereby** the system components (Si) include technical operations and/ or hardware units.

3. Method according to one of the previous claims,
**whereby** at least one equivalence relation function between sequence patterns is specified by the user before starting the configuration of the technical system (M2).

4. Method according to claim 3,
**whereby** a sequence pattern equivalence relation function specification can request at least one equal first system component (Si) directly or non-directly followed by at least one equal second system component (Si) for sequence patterns to be equal.

5. Method according to one of the previous claims,
**whereby** the automation system (A) is trained by the following steps in advance and while used:
- configuring a technical system by choosing a sequence (Pi) of system components (Si) by the user (U),
- storing the chosen sequence (Pi) of system components (Si) in a database (DB), and
- training (G) the automation unit (A) by using the sequence (Pi) of system components (Si) stored in the database (DB).

6. Method according to one of the previous claims,
**whereby** the support threshold of a sequence pattern is a value that indicates how frequent a sequence pattern must be in the database (DB) that the automation unit (A) introduces a system component (Si) based on the analysed sequence pattern.

7. Method according to one of the previous claims,
**whereby** a sequence pattern describes a series of successive system components (Si).

8. Method according to one of the previous claims,
**whereby** the analysis of the pattern includes a pattern mining procedure.

9. Method according to one of the previous claims,
**whereby** the database (DB) is organized in form of a search tree (ST).

10. Method according to one of the previous claims,
**whereby** the database (DB) stores sequences (Pi) of system components (Si) auf one user (U) or of multiple users (U).

11. Method according to one of the previous claims,
**whereby** the technical system is an engineering system, an automatization system, a production system and/ or an industrial system and/ or includes a technical project on the technical system.

12. A computer program product comprising instructions which, when the program is executed by the computational device, cause the computational device to carry out the steps of the method according to one of the claims 1 to 11.

13. A computer-readable storage medium comprising instructions which, when executed by the computational device, cause the computational device to carry out the steps of the method according to one of the claims 1 to 11.
